# EUROPÄISCHE PATENTSCHRIFT

(11) **EP 3 436 709 B1**
(45) Veröffentlichungstag und Bekanntmachung des Hinweises auf die Patenterteilung: **28.07.2021**
(21) Anmeldenummer: 17712445.0
(22) Anmeldetag: 17.03.2017
(51) Int. Cl.: F16B 11/00, F16B 37/04

(54) **BEFESTIGUNGSELEMENT**
FASTENING ELEMENT
ÉLÉMENT DE FIXATION

(30) Priorität: 30.03.2016 DE 102016105794
(43) Veröffentlichungstag der Anmeldung: 06.02.2019
(73) Patentinhaber: Böllhoff Verbindungstechnik GmbH, 33649 Bielefeld (DE)
(72) Erfinder: STUMPF, Michael, 33611 Bielefeld (DE); DRÜKE, Franz, 32758 Detmold (DE); MATTHES, Jörg, 32051 Herford (DE)
(74) Vertreter: HWP Intellectual Property
(86) Internationale Anmeldenummer: PCT/EP2017/056407
(87) Internationale Veröffentlichungsnummer: WO 2017/167590

(56) Entgegenhaltungen:
- WO-A1-2009/064818
- WO-A2-2007/076267

## Beschreibung

### 1. Gebiet der Erfindung

Die vorliegende Erfindung betrifft ein Befestigungselement mit einem Käfigelement, insbesondere eine Käfigmutter, um ein Verbindungselement auf einer Bauteiloberfläche zu befestigen. Des Weiteren betrifft vorliegende Erfindung ein Bauteil mit einem derartigen Befestigungselement sowie ein entsprechendes Installations- und Herstellungsverfahren für dieses Befestigungselement.

### 2. Hintergrund der Erfindung

Im Stand der Technik ist es ein generell bekanntes Problem, ein Verbindungselement, wie beispielsweise eine Mutter, an einer Bauteiloberfläche zu befestigen. Dieses Problem stellt sich beispielsweise dann, wenn eine Schraube nicht direkt in einem Bauteil befestigt werden kann. Eine weitere Situation betrifft ein nur einseitig zugängliches Bauteil, so dass auf der nicht zugänglichen Bauteilseite ein Verbindungselement bereits fest oder schwimmend angeordnet sein muss. Aufgrund dieser technischen Anforderungen wurden verschiedene Konstruktionen zur schwimmenden Anordnung von Verbindungselementen an einer Bauteiloberfläche entwickelt.

EP 1 468 196 B1 beschreibt in diesem Zusammenhang eine Mutter mit einem tellerartigen Befestigungsflansch, die schwimmend in einem U-Profil mithilfe eines Federelements festgeklemmt ist. Dieses U-Profil besitzt eine Öffnung in seiner Basis, die zu einer Bauteilöffnung ausgerichtet wird. Die einander gegenüberliegenden Schenkel des U-Profils ragen seitlich von dieser Öffnung senkrecht nach oben, um einander gegenüberlegende Befestigungsöffnungen für eine formschlüssige Befestigung des Verbindungselements bereitzustellen. Die Öffnung im U-Profil ist mit einem Kragen ausgestattet, der in die im Bauteil vorhandene Öffnung eingesetzt wird. Dieser Kragen wird innerhalb der Bauteilöffnung derart verformt, dass eine kraftschlüssige Verbindung zwischen dem U-Profil und der Bauteilöffnung entsteht. Auf diese Weise ist die schwimmend angeordnete Mutter direkt benachbart zur Bauteilöffnung angeordnet.

Da der Kragen der Öffnung im U-Profil in der Bauteilöffnung verformt bzw. darin verpresst wird, ergeben sich hohe mechanische Belastungen für das Bauteil in diesem Bereich. Daher ist diese Art der Befestigung für spröde oder dünne Bauteile ungeeignet. Denn diese Art der Befestigung löst schädigendes Risswachstum des Bauteils in der Umgebung der Bauteilöffnung aus. Des Weiteren ist es erforderlich, dass das Bauteil an der Bauteilöffnung beidseitig zugänglich ist. Denn während das Befestigungselement von einer Seite des Bauteils an der Bauteiloberfläche angeordnet wird, erfolgt die Befestigung des Befestigungselements von der gegenüberliegenden Seite des Bauteils. Diese erforderliche zweiseitige Zugänglichkeit schränkt die Anwendungsmöglichkeit des hier offenbarten Befestigungselements ein.

EP 0 758 057 B1 beschreibt ein Befestigungselement, welches sowohl mechanisch durch eine kraftschlüssige Verbindung wie auch chemisch durch eine Klebeverbindung an einem Bauteil befestigt wird. Zu diesem Zweck werden eine Kombination aus einer Mutter mit einem tellerähnlichen Flansch und eine Auskleidehülse für die Bauteilöffnung mithilfe eines Haltegehäuses an einer Bauteilöffnung befestigt. Während die Verkleidungshülse in die Bauteilöffnung hineinragt und später an dieser Stelle verpresst bzw. vernietet wird, wird das Haltegehäuse über der Kombination aus Mutter und Auskleidehülse klebend an der Bauteiloberfläche befestigt. Da die Mutter über ihren tellerähnlichen Flansch schwimmend in dem Haltegehäuse befestigt ist, liegt somit eine kombinierte klebende und mechanische Befestigung des Befestigungselements vor. Auch die Installation dieses Befestigungselements erfordert eine zweiseitige Zugänglichkeit des Bauteils. Denn auf der einen Seite des Bauteils wird das Haltegehäuse aufgeklebt, während von der anderen Seite des Bauteils die Auskleidungshülse innerhalb der Bauteilöffnung verpresst wird. Zudem treten auch bei dieser Art der Befestigung mechanische Belastungen gerade am Rand der Bauteilöffnung auf. Ein weiterer Nachteil besteht in dem relativ hohen Installationsaufwand des Befestigungselements. Denn sowohl das mechanische Verpressen der Auskleidungshülse in der Bauteilöffnung wie auch das Verkleben des Haltegehäuses oberhalb des Verbindungselements erfordern mehrere aufeinander abzustimmende Installationsschritte. Daher sind sowohl die konstruktive Gestaltung des Befestigungselements wie auch das Installationsverfahren des Befestigungselements aufwändig und zeitintensiv.

In WO 2007/076267 ist ebenfalls ein Befestigungselement beschrieben, das nur an zweiseitig zugänglichen Bauteilöffnungen installierbar ist. Im Vergleich zu den oben beschriebenen Befestigungselementen wird hier aber nur das U-förmige Basiselement an der Bauteiloberfläche klebend positioniert. Insofern verringert die hier beschriebene technische Lösung die mechanische Belastung des Bauteils gerade am Rand der Bauteilöffnung. Dies eröffnet die Möglichkeit, das hier beschriebene Befestigungselement auch an dünneren Bauteilen zu installieren. Die U-förmige Gestaltung des Basiselements, an dem die Mutter mit tellerförmigem Flansch schwimmend befestigt ist, stellt jedoch eine ästhetisch wenig ansprechende sowie gegen Verschmutzung empfindliche Konstruktion dar. Gleichzeitig eröffnet diese Konstruktion aber die Möglichkeit, dass das Verbindungselement mit tellerförmigem Flansch ausgetauscht werden kann, ohne das U-förmige Basiselement von der Bauteiloberfläche zu entfernen. Aufwändig ist in diesem Zusammenhang lediglich, dass der das Verbindungselement haltende Federring bzw. eine ähnliche Federkonstruktion aus dem U-förmigen Basisteil mit entsprechend hohem Kraftaufwand entfernt werden muss. Erst dann ist das Verbindungselement austauschbar. Dies ist nur mithilfe von Werkzeugen und einer ausreichenden mechanischen Kraft möglich. Dabei besteht die Möglichkeit, dass sich das U-förmige Basiselement aufgrund der Kraftaufwendung lockert oder sogar vollständig von der Bauteiloberfläche gelöst wird.

In DE 729 521 ist ein Befestigungselement ähnlicher Konstruktion beschrieben. Auch hier wird eine Mutter mit tellerähnlichem Befestigungsflansch formschlüssig an einem U-förmigen Basiselement mit einer zentralen Öffnung angeordnet. Gemäß einer beschriebenen Ausgestaltung unterstützt ein Federelement die schwimmende Lagerung des Verbindungselements im U-förmigen Basisteil. Um das U-förmige Basisteil wirksam mit einer Bauteiloberfläche verkleben zu können, wird das U-förmige Basissteil über einen Kragen zunächst an einem zwischengeordneten Adapter befestigt. Dieser Adapter besteht aus einem flächigen nichtmetallischen Bauteil mit einer Öffnung, in der der Kragen der Öffnung des U-förmigen Basisteils verpresst bzw. kraftschlüssig angeordnet werden kann. Nachfolgend wird dieser Adapter mit seiner Fläche auf der Bauteiloberfläche in Ausrichtung zu einer Bauteilöffnung aufgeklebt. Zwar bringt die Installation dieses Befestigungselements keine größeren mechanischen Belastungen auf den Rand einer Bauteilöffnung auf, doch ist das Installationsverfahren aufwändig und ineffektiv. Denn zunächst muss ein mechanisches Befestigungsverfahren für den Flansch realisiert werden, welches ausreichend sein könnte, um das Befestigungselement direkt an dem Bauteil anzuordnen. Zudem ist das Befestigungselement mit seinem U-förmigen Basisteil und dem schwimmend darin angeordneten Verbindungselement mit den gleichen Nachteilen verbunden, wie es oben bereits beschrieben worden ist.

Die WO 2009/064818 A1 beschreibt eine Befestigungsanordnung für eine schwimmend gelagerte Mutter.

Ausgehend von dem oben beschriebenen Stand der Technik ist es daher die Aufgabe vorliegender Erfindung, ein alternatives Befestigungselement zur schwimmenden Anordnung eines Verbindungselements an einer Bauteiloberfläche bereitzustellen. Dieses Befestigungselement sollte sich durch eine einfache Installation sowie durch eine universell einsetzbare Konstruktion auszeichnen.

### 3. Zusammenfassung vorliegender Erfindung

Die obige Aufgabe wird durch ein Käfigelement für ein Befestigungselement gemäß dem unabhängigen Patentanspruch 1, ein Befestigungselement in Kombination mit diesem Käfigelement gemäß dem unabhängigen Patentanspruch 10, durch ein Bauteil mit einer Bauteilöffnung und einem daran angrenzend angeordneten Befestigungselement gemäß dem unabhängigen Patentanspruch 11 sowie durch ein Montageverfahren für das Befestigungselement gemäß dem unabhängigen Patentanspruch 12 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Das erfindungsgemäße Befestigungselement, insbesondere eine Käfigmutter, zeichnet sich durch ein Käfigelement und ein Verbindungselement aus, das durch eine Installationsöffnung der zweiten Stirnseite des Käfigelements im Aufnahmeraum des Käfigelements aufnehmbar ist und welches im Aufnahmeraum formschlüssig schwimmend gehalten ist. Das erfindungsgemäße Käfigelement für das oben genannte Befestigungselement ist durch die folgenden Merkmale charakterisiert: eine erste und eine zweite einander gegenüberliegend angeordnete Stirnseite, die über eine umlaufende Begrenzungswand miteinander verbunden sind, um einen Aufnahmeraum für ein Verbindungselement zu definieren. Dabei bildet die erste Stirnseite zumindest teilweise eine Klebefläche zum Befestigen des Käfigelements an einem Bauteil. Die zweite Stirnfläche weist die oben genannte Installationsöffnung für das Verbindungselement auf, so dass das Verbindungselement durch die Installationsöffnung im Aufnahmeraum aufnehmbar und dort formschlüssig schwimmend haltbar ist.

Das erfindungsgemäße Käfigelement, das in Kombination mit einem Verbindungselement, wie beispielsweise einer Mutter mit tellerähnlichem Befestigungsflansch, das Befestigungselement bildet, zeichnet sich im Vergleich zum Stand der Technik durch ein anderes Konstruktionsprinzip aus. Das Käfigelement definiert im Gegensatz zu dem U-förmigen Befestigungsprofil des Standes der Technik einen zugänglichen Aufnahmeraum, in den das Verbindungselement mit tellerähnlichem Befestigungsflansch einsetzbar, aus dem es entnehmbar, in dem es formschlüssig haltbar sowie flexibel aufgrund seiner schwimmenden Anordnung zu einer Bauteilöffnung anordenbar ist. Dazu definiert das Käfigelement eine um das Verbindungselement angeordnete wandartige Begrenzung, die in nahezu alle Raumrichtungen den Aufnahmeraum für das Verbindungselement einschließt bzw. eingrenzt. Zwar hat dieser Aufnahmeraum eine Installationsöffnung an der ersten Stirnseite, die aber in ihrer Größe an den tellerähnlichen Befestigungsflansch des Verbindungselements angepasst ist. Entsprechend lässt sich das Verbindungselement einfach in den Aufnahmeraum durch die Installationsöffnung einsetzen, ist aber aus diesem nicht ohne weiteres entfernbar. Denn die Installationsöffnung ist in ihrer radialen Ausdehnung kleiner ausgebildet als die seitliche Ausdehnung des tellerförmigen Befestigungsflansches des Verbindungselements. Über eine bevorzugte geneigte Anordnung des Befestigungsflansches bezogen auf die erste Stirnseite des Käfigelements ist eine laterale Ausdehnung des Befestigungsflansches reduzierbar. Dadurch kann das Verbindungselement mit Befestigungsflansch durch die Installationsöffnung in das Käfigelement eingesetzt bzw. eingefädelt werden. Diese Vorgehensweise ist unter anderem dann bevorzugt, wenn das Verbindungselement einen starren nicht federn ausgebildeten Befestigungsflansch umfasst. In diesem Fall besteht das Verbindungselement oder nur der Befestigungsflansch bevorzugt aus Metall oder Kunststoff, die entsprechend der verwendeten Materialstärke nicht oder vernachlässigbar flexibel bzw. federnd sind. In gleicher Weise bzw. in kinematischer Umkehr des Einsetzens ist es bevorzugt, das Verbindungselement aus dem Käfigelement zu entfernen, um es beispielsweise gegen ein anderes Verbindungselement auszutauschen. Gemäß einer weiteren bevorzugten Ausführungsform ist der Befestigungsflansch in seiner lateralen Ausdehnung nur geringfügig größer als die Installationsöffnung. Setzt man den Befestigungsflansch an der Installationsöffnung an und drückt ihn dann durch die Installationsöffnung, dann schnappt der Befestigungsflansch bevorzugt in den Aufnahmeraum ein. Dieses bevorzugte Einschnappen, welches durch eine federnde Flexibilität zumindest eines der radial außen angeordneten Enden des Befestigungsflansches unterstützt wird, kann durch Einführschrägen am Rand der Installationsöffnung unterstützt sein. Es ist ebenfalls bevorzugt, das Verbindungselement über eine umgekehrte Bewegung aus dem Aufnahmeraum und durch die Installationsöffnung zu entfernen oder auszurasten oder ausztauschen. Eine an der zweiten Stirnseite vorgesehene Öffnung, die ebenfalls eine Installation des Verbindungselements im Aufnahmeraum ermöglicht, wird durch das Aufkleben des Käfigelements auf einer Bauteiloberfläche geschlossen. Damit ist auch an dieser Stirnseite der Aufnahmeraum begrenzt, so dass das Verbindungselement sicher und schwimmend darin formschlüssig gehalten ist. Aus dieser Konstruktion des Befestigungselements folgt, dass das Verbindungselement vor einem Aufkleben des Käfigelements durch die Installationsöffnung oder die Öffnung an der ersten Stirnseite in das Käfigelement eingesetzt wird. Erfindungsgemäß bevorzugt wird alternativ nach dem Aufkleben des Käfigelements auf der Bauteiloberfläche das Verbindungselement durch die Installationsöffnung im Käfigelement eingesetzt oder aus diesem entfernt oder über die Installationsöffnung ausgetauscht.

Zwar verhindert die umlaufende Begrenzungswand des Käfigelements das Entfernen des Käfigelements aus dem Aufnahmeraum, es ermöglicht aber gleichzeitig eine flexible Ausrichtung des Verbindungselements im Rahmen der Bewegungsmöglichkeiten des Aufnahmeraums. Diese Ausrichtungsmöglichkeiten sind durch die passende Dimensionierung des Aufnahmeraums in Bezug auf den tellerähnlichen Befestigungsflansch flexibel einstellbar. Zudem eröffnen sie mehr Ausrichtungsmöglichkeiten als die aus dem Stand der Technik bekannten zwei einander diametral gegenüberliegenden Langlöcher.

Gemäß einer bevorzugten Ausführungsform vorliegender Erfindung ist ein Wandelement im Aufnahmeraum des Käfigelements verschiebbar und zumindest teilweise radial angrenzend an die Begrenzungswand angeordnet.

Während die zweite Stirnseite des Käfigelements die Installationsöffnung definiert, dient die dazu gegenüberliegende erste Stirnseite dazu, eine für das Käfigelement passende Klebefläche an einer Bauteiloberfläche bereitzustellen. Je nach Anforderungen an die Klebeverbindung, erstreckt sich die Größe der Klebefläche vorzugsweise über unterschiedlich große Bereiche der ersten Stirnseite bzw. einen Teil dieser Stirnseite. Da die erste Stirnseite bevorzugt nur in einem umlaufenden Randbereich als Klebefläche genutzt wird, ist in einem daran angrenzenden zentralen Bereich der ersten Stirnseite eine Öffnung vorgesehen. Diese Öffnung in der ersten Stirnseite wird auf eine Bauteilöffnung ausgerichtet, so dass ein Verbindungsmittel, vorzugsweise ein Gewindebolzen, mit dem Verbindungselement durch die Bauteilöffnung verbunden werden kann.

Damit während des Anklebens des Befestigungselements bzw. des Käfigelements an einer Bauteiloberfläche ein auf der Klebefläche befindlicher Klebstoff nicht in den Aufnahmeraum verdrängt wird, ist das oben genannte axial versetzbare Wandelement vorgesehen. Da dieses Wandelement in axialer Richtung des Käfigelements also senkrecht zur Klebeseite oder ersten Stirnseite versetzbar bzw. verschiebbar angeordnet ist, ist es mit einem über die Klebefläche hinausragenden Rand an der ersten Seite anordenbar. Dieser vorstehende Rand bildet bezogen auf die Klebefläche radial einwärts einen schützenden Kragen. Dieser schützende Kragen hält verdrängten Klebstoff davon ab, in den Aufnahmeraum einzudringen. Je nach Gestaltung des Wandelements und der Abdichtung zwischen dem Wandelement und der Klebefläche wird mit dieser Konstruktion ein vollständiger oder zumindest ein teilweiser Schutz des Aufnahmeraums vor dem Eindringen von Klebstoff erzielt.

Wie bereits oben erwähnt worden ist, ist das Wandelement vorzugsweise senkrecht zur Klebefläche zwischen einer über die erste Stirnseite axial vorstehende Position und einer im Aufnahmeraum aufgenommenen Position versetzbar. Die axial vorstehende Position bildet den schützenden Kragen zur Vermeidung des Eindringens von Klebstoff in den Aufnahmeraum. Vorzugsweise bildet das versetzbare Wandelement mit der ersten Stirnseite oder der Begrenzungswand eine kraftschlüssige oder reibschlüssige Verbindung. Somit ist das Wandelement in einer beliebig über die erste Stirnseite vorstehende Position anordenbar. In gleicher Weise ermöglicht diese Reibschlussverbindung, dass das Wandelement beispielsweise während des Aufsetzens des Käfigelements auf der Bauteiloberfläche durch leichten Druck eines Befestigungsautomaten oder eines Werkers auf das Käfigelement in den Aufnahmeraum versetzt werden kann. Durch diese gezielte Bewegung des Wandelements in den Aufnahmeraum hinein wird die Klebefläche der ersten Stirnseite in die passende Ausrichtung oder sogar in Kontakt mit der Bauteiloberfläche gebracht, um das Käfigelement auf der Bauteiloberfläche klebend zu befestigen. Bei dieser Bewegung wird das Wandelement in gleicher Weise in den Aufnahmeraum bewegt, wie sich die Klebefläche der ersten Stirnseite der Bauteiloberfläche annähert. Aufgrund dieser gegenläufigen und aufeinander abgestimmten Bewegung des Wandelements und der Klebefläche bezogen auf die Bauteiloberfläche gewährleistet das Wandelement permanent einen Schutz gegen das Eindringen von Klebstoff in den Aufnahmeraum.

Die erste und die zweite Stirnseite des Käfigelements werden durch die umlaufende Begrenzungswand miteinander verbunden. Vorzugsweise ist die umlaufende Begrenzungswand an der radialen Außenseite der ersten und zweiten Stirnseite angeordnet. Zudem ragt die zweite Stirnseite vorzugsweise radial einwärts, bevor sie durch die Installationsöffnung durchbrochen ist. Auf diese Weise entsteht unterhalb der zweiten Stirnseite ein Aufnahmeraum, in dem der tellerähnliche Befestigungsflansch des Verbindungselements formschlüssig und gleichzeitig bewegbar und damit gezielt anordenbar ist. Des Weiteren ist vorzugsweise im Aufnahmeraum mindestens eine radiale Ausbuchtung vorgesehen, mit deren Hilfe das Verbindungselement durch die Installationsöffnung einsetzbar ist. Diese radiale Ausbuchtung eröffnet eine lateral derart weit versetzte Anordnung des tellerähnlichen Befestigungsflansches des Verbindungselements, dass der tellerähnliche Befestigungsflansch trotz seiner Größe gerade die Installationsöffnung passieren kann. Diese Ausnahmeposition des Verbindungselements ist vorzugsweise nur mit einer gezielten Bewegung eines Installationsautomaten oder eines Werkers erreichbar, so dass das Verbindungselement während des normalen Betriebs bzw. der normalen Nutzung des Befestigungselements nicht aus der formschlüssigen Verbindung im Aufnahmeraum gelöst werden kann.

Vorzugsweise ist die radiale Ausbuchtung im Aufnahmeraum derart angeordnet, dass nur in diesem Bereich der tellerähnliche Befestigungsflansch des Verbindungselements im Aufnahmeraum aufnehmbar ist. Gemäß einer weiteren bevorzugten Ausführungsform der Gestaltung und Dimensionierung des Aufnahmeraums ist vorgesehen, dass die Begrenzungswand einen Durchmesser aufweist, der mindestens so groß wie die laterale Ausdehnung des Befestigungsflansches des Verbindungselements ist. Aufgrund dieser Abstimmung des Durchmessers des Aufnahmeraums und der lateralen Ausdehnung des Befestigungsflansches des Verbindungselements ist das Verbindungselement im Rahmen seiner formschlüssigen Halterung im Aufnahmeraum relativ frei positionierbar.

Gemäß einer weiteren bevorzugten Ausführungsform vorliegender Erfindung ist das Verbindungselement eine Gewindehülse mit einer asymmetrischen tellerähnlichen Endfläche. Diese bevorzugte asymmetrische tellerähnliche Endfläche bildet den tellerähnlichen Befestigungsflansch, wie er oben bereits erwähnt worden ist. Neben dieser Gewindehülse ist es ebenfalls bevorzugt, andere Verbindungskomponenten mit dem tellerähnlichen Befestigungsflansch zu verbinden. Dazu gehört beispielsweise eine Hülse mit einem inneren Bajonettverschluss, eine Hülse, die eine Reibschlussverbindung bereitstellt, eine geeignete Rastverbindung in Kombination mit dem Befestigungsflansch oder andere gängige Verbindungskomponenten, die sich mit einem tellerähnlichen Befestigungsflansch kombinieren lassen.

Wie bereits oben erwähnt worden ist, wird das Käfigelement und somit das Befestigungselement vorzugsweise mithilfe von Klebstoff an der Bauteiloberfläche befestigt. Gemäß einer bevorzugten Ausführungsform vorliegender Erfindung ist das Käfigelement aus lichtdurchlässigem Kunststoff hergestellt. Diese gezielte Materialwahl eröffnet die Möglichkeit, das Käfigelement mit einem lichtempfindlichen Klebstoff bzw. mit einem durch Licht aktivierbaren Klebstoff an der Bauteiloberfläche zu befestigen. In diesem Zusammenhang wird vorzugsweise das Käfigelement durch die Einwirkung von Licht an der Bauteiloberfläche vorfixiert. Eine vollständige Befestigung des Käfigelements erfolgt durch weitere Zufuhr von Lichtenergie oder durch Wärme oder durch Zeitablauf oder durch eine andere bekannte Aushärtungsmöglichkeit. Des Weiteren ist es bevorzugt, den lichtempfindlichen Klebstoff sofort durch eine geeignete Lichtmenge auszuhärten, so dass das Käfigelement binnen kurzer Zeit vorzugsweise binnen weniger Sekunden, an der Bauteiloberfläche befestigt ist. Sobald das Käfigelement an der Bauteiloberfläche festgeklebt worden ist, ist das Verbindungselement über seinen tellerähnlichen Befestigungsflansch im Aufnahmeraum einsetzbar. Natürlich ist es ebenfalls bevorzugt, das Käfigelement mit bereits darin installiertem Verbindungselement auf der Bauteiloberfläche aufzukleben. Während dieses Vorgangs schützt das axial versetzbare Wandelement in seiner kragenähnlichen Anordnung den Aufnahmeraum vor möglicherweise in den Aufnahmeraum eindringendem Klebstoff. Auf diese Weise ist ebenfalls gewährleistet, dass der tellerähnliche Befestigungsflansch des Verbindungselements nicht an der Oberfläche festgeklebt wird.

Gemäß einer weiteren bevorzugten Ausführungsform besteht das Wandelement aus Metall oder Kunststoff, so dass die Begrenzungswand des Käfigelements auf diese Weise stabilisiert wird. In diesem Zusammenhang ist es ebenfalls bevorzugt, ein zusätzlich stabilisierendes Wandsegment angrenzend an die Begrenzungswand anzuordnen. Diese Stabilisierung dient bevorzugt dazu, durch die Begrenzungswand aufgefangene Drehmomente des Verbindungselements bzw. des tellerähnlichen Befestigungsflanschs des Verbindungselements abzustützen, ohne auf diese Weise beschädigt zu werden. Diese Situation ist beispielsweise dann vorstellbar, wenn eine Schraube durch eine Bauteilöffnung in die Gewindehülse des Befestigungselements eingeschraubt werden würde, so dass sich dadurch der tellerähnliche Befestigungsflansch zumindest teilweise mit der Schraube mitdreht und sich an der Begrenzungswand abstützt.

Gemäß einer weiteren bevorzugten Ausführungsform vorliegender Erfindung weist die Klebfläche eine Mehrzahl von Vorsprüngen auf, die als Abstandshalter zu einer Bauteiloberfläche dienen. Diese Abstandshalter geben eine maximale Dicke einer Klebeschicht zwischen Klebefläche und Bauteiloberfläche vor. Dadurch wird eine optimale Anordnung des Käfigelements auf der Bauteiloberfläche und eine optimale Einstellung der Dicke der Klebeschicht erzielt. Dies garantiert eine verlässliche Befestigung des Käfigelements auf der Bauteiloberfläche.

Vorliegende Erfindung umfasst neben dem Käfigelement auch ein Befestigungselement, insbesondere eine Käfigmutter, in dem das Käfigelement gemäß einer der oben beschriebenen Ausführungsformen in Kombination mit einem Verbindungselement verwendet wird, das durch die Installationsöffnung der zweiten Stirnseite oder durch eine Öffnung in der erste Stirnseite im Aufnahmeraum des Käfigelements aufnehmbar ist und das im Aufnahmeraum formschlüssig schwimmend gehalten ist. Die schwimmende Halterung im Aufnahmeraum wird bevorzugt durch die Bauteiloberfläche im aufgeklebten Zustand des Befestigungselements realisiert, da die Bauteiloberfläche den Aufnahmeraum an der ersten Stirnseite abschließt. Es ist ebenfalls bevorzugt, in den Aufnahmeraum radial einwärts ragende Rastnasen vorzusehen, die das Verbindungselement im Aufnahmeraum halten.

Vorliegende Erfindung umfasst zudem ein Bauteil mit einer Bauteilöffnung, an die angrenzend das oben beschriebene Käfigelement oder das oben beschriebene Befestigungselement auf der Bauteiloberfläche aufgeklebt ist.

Zu diesem Zweck offenbart die vorliegende Erfindung ebenfalls ein Montageverfahren für das Befestigungselement auf der Bauteiloberfläche. Dieses Montageverfahren weist die folgenden Verfahrensschritte auf: Bereitstellen des oben beschriebenen Käfigelements, Aufbringen von Klebstoff auf die Klebefläche der ersten Stirnseite und/oder auf eine gegenüber der Klebefläche angeordnete Bauteiloberfläche des Bauteils, Positionieren des Käfigelements mit der Klebefläche auf der Bauteiloberfläche des Bauteils, Aushärten des Klebstoffs und Installieren eines Verbindungselements im Aufnahmeraum des Käfigelements. Wie es oben bereits angedeutet worden ist, sind unterschiedliche Arten von Klebstoff zur Befestigung des Käfigelements auf der Bauteiloberfläche bevorzugt. Eine Alternative besteht in der Nutzung eines lichtempfindlichen Klebstoffs, so dass der Klebstoff über die Zufuhr von Lichtenergie ausgehärtet oder ein Aushärtungsprozess ausgelöst wird. Dazu besteht das Käfigelement bevorzugt aus lichtdurchlässigem Klebstoff. Eingestrahltes Licht dringt durch das Käfigelement auf die Klebfläche und den dort oder auf dem Bauteil aufgetragenen Klebstoff, um dessen Aushärtung zu starten und/oder den Klebstoff auszuhärten. Eine weitere bevorzugte Ausführungsform besteht in der Nutzung eines wärmeempfindlichen Klebstoffs. Dieser wird über die Zufuhr von Wärme ausgehärtet. Dabei kann die Wärme direkt zugeführt werden oder eine Wärmeabgabe von parallel ablaufenden Prozessen genutzt werden. Des Weiteren ist es ebenfalls bevorzugt, unterschiedliche Energiearten, wie beispielsweise Licht und Wärme, zur Aushärtung des Klebstoffs zuzuführen. Das Installieren des Verbindungselements wird bevorzugt zu unterschiedlichen Zeitpunkten des Montageverfahrens durchgeführt, wie unten näher erläutert ist. Gemäß einer Ausführungsform wird das Verbindungselement im Käfigelement installiert, bevor dieses aufgeklebt wird. Gemäß einer anderen Ausführungsform wird das Verbindungselement erst im aufgeklebten Käfigelement installiert.

Gemäß einer weiteren bevorzugten Ausführungsform vorliegender Erfindung wird das Käfigelement bereits mit einem darin installierten Verbindungselement bereitgestellt. In diesem Zusammenhang ist es bevorzugt, das Verbindungselement im Aufnahmeraum durch die Installationsöffnung an der zweiten Stirnseite oder durch eine Öffnung an der ersten Stirnseite zu installieren, bevor das Käfigelement auf der Bauteiloberfläche aufgeklebt wird. Gemäß einer anderen Alternative wird das Verbindungselement im Aufnahmeraum durch die Installationsöffnung an der zweiten Stirnseite installiert, nachdem das Käfigelement auf der Bauteiloberfläche aufgeklebt worden ist. Auf diese Weise ist im Montageverfahren flexibel einstellbar, zu welchem Zeitpunkt das Verbindungselement im Käfigelement angeordnet wird. Man kann somit das Käfigelement bzw. das gesamte Befestigungselement flexibel auf die gesamte Montagesituation abstimmen. Dies ermöglicht, dass bespielweise das Käfigelement in einem vormontierten Zustand gemeinsam mit dem Verbindungselement auf der Bauteiloberfläche aufgeklebt wird. In gleicher Weise ist es bevorzugt, dass das Käfigelement und das Verbindungselement einzeln für den Montagevorgang bereitgestellt werden. Erst während des Ablaufs der Montage wird das Verbindungselement in das Käfigelement eingesetzt, bevor das Käfigelement auf der Bauteiloberfläche aufgeklebt wird. Es ist ebenfalls bevorzugt, das Verbindungselement in aufgeklebte Käfigelemente einzusetzen bzw. dort zu installieren oder auszutauschen, nachdem deren Montage abgeschlossen ist. Des Weiteren umfasst das erfindungsgemäße Montageverfahren bevorzugt den folgenden Schritt während des Positionierens des Käfigelements mit der Klebefläche auf der Bauteiloberfläche: Versetzen des Wandelements aus einer über die Klebefläche axial vorstehenden Position zur Bildung eines versetzbaren Kragens angrenzend an die Klebefläche in den Aufnahmeraum, so dass der Eintritt von Klebstoff in den Aufnahmeraum verhindert ist.

Zudem umfasst das Montageverfahren bevorzugt den bereits oben diskutierten Schritt, dass das Aushärten des Klebstoffs mittels Licht und/oder Wärme und/oder mittels Zeitablauf erfolgt. Zudem ist es im Rahmen des Montageverfahrens bevorzugt, das Käfigelement mit der Klebefläche angrenzend an eine Bauteilöffnung zu positionieren. Dies stellt sicher, dass das Verbindungselement aufgrund seiner schwimmenden Anordnung im Aufnahmeraum des Käfigelements flexibel und genau auf die Bauteilöffnung ausrichtbar ist. Sobald diese Ausrichtung abgeschlossen ist, kann ein passendes Verbindungsmittel durch die Bauteilöffnung hindurchgeführt werden, um dort mit dem im Aufnahmeraum angeordneten Verbindungselement verbunden zu werden. Entsprechend ist es im Rahmen des Montageverfahrens bevorzugt, das Verbindungselement als eine Mutter oder Gewindehülse auszugestalten und eine Schraube in das Verbindungselement einzuschrauben, bis das Verbindungselement mit dem tellerähnlichen Befestigungsflansch auf der Bauteiloberfläche aufliegt.

Vorliegende Erfindung offenbart zudem ein Herstellungsverfahren für das Käfigelement. Dieses Herstellungsverfahren umfasst die folgenden Schritte: Bereitstellen einer ersten Spritzgussform für das Käfigelement, die vorzugsweise eine komplementäre Gestalt in Bezug auf das oben beschriebene Käfigelement aufweist. Als weiterer Schritt folgt das Spritzgießen des Käfigelements in der ersten Spritzgussform sowie ein Entformen des Käfigelements aus der ersten Spritzgussform. Gemäß einer weiteren bevorzugten Ausgestaltung des vorliegenden Herstellungsverfahrens wird eine zweite Spritzgussform für das Wandelement bereitgestellt, das Wandelement in der zweiten Spritzgussform spritzgegossen und aus der zweiten Spritzgussform entformt.

Gemäß einer Verfahrensalternative ist es bevorzugt, das versetzbare Wandelement des Käfigelements in der ersten Spritzgussform mit dem darin enthaltenen Käfigelement, insbesondere mit Hilfe eines 2K Spritzgussverfahrens (Zweikomponentenspritzgussverfahren), spritzzugießen, so dass das Wandelement reibschlüssig und/oder mit Hilfe einer Mehrzahl von Abrissstegen am Käfigelement befestigt ist. Unter dem Begriff Zweikomponentenspritzgießen werden diejenigen Verfahren zusammengefasst, bei denen zwei verschiedene Kunststofftypen oder Kunststoffmodifikationen über Spritzgießen in einem Prozess miteinander verbunden werden. Mit unterschiedlicher Kunststoffmodifikation ist dabei derselbe Kunststofftyp, allerdings mit abweichenden Füllstoffen, wie beispielsweise Farbstoffe (Mehrfarbenspritzgießen), Verstärkungs- oder Fasermaterial bekannter Kunststoffe, wie bspw. Glasfasern, unterschiedlich große Anteile an Verstärkungsmaterial oder unterschiedliche oder unterschiedliche Anteile von Weichmachern, gemeint. Diese Art von Urformung birgt ein großes Potential bezüglich Kostenoptimierung und Rationalisierung in sich, denn komplexe Teile mit mehreren Funktionsanforderungen (z.B. mehrere Farben, hart/weich usw.) lassen sich in einem Arbeitsschritt und ohne größere Nacharbeit herstellen. Bei diesem Verfahren werden zwei unterschiedliche Kunststoffe zeitlich versetzt in eine Spritzgussform eingespritzt, um ein aus zwei Komponenten bestehendes Teil herzustellen. Es ist ebenfalls möglich, den gleichen Kunststoff zeitlich versetzt in zwei oder mehreren Schüssen in die Spritzgussform einzubringen. Die durch den jeweiligen Schuss erzeugten Komponenten werden in aneinander angrenzender Anordnung in der Spritzgussform gebildet, ohne ineinander zu fließen. Dabei ist es ebenfalls bevorzugt, dass zueinander abgegrenzte Hohlräume der Spritzgussform gleichzeitig oder zeitlich versetzt mit dem gleichen oder unterschiedlichen Kunststoffen gefüllt werden, um die oben genannten Komponenten zu bilden. Dabei sind vorzugsweise die mehreren Komponenten, hier das Wandelement und das Käfigelement, über eine Mehrzahl von Abrissstegen miteinander verbunden. Abrissstege bezeichnen stegartige Brücken zwischen den Kunststoffteilen, die aufgrund ihres geringen Durchmessers ohne maschinellen Aufwand durchtrennbar sind.

Das Zweikomponentenspritzgießen gewährleistet, dass das Wandelement derart an das Käfigelement angespritzt wird, dass es durch Krafteinwirkung, bevorzugt beim Aufkleben, in das Käfigelement versetzt wird. Dieser Herstellungsweg realisiert die Vormontage des Wandelements im Käfigelement, sodass die Herstellung des Käfigelements oder des Befestigungselements vereinfacht wird.

Weiterhin bevorzugt wird im Rahmen des Herstellungsverfahrens das Käfigelement mit dem Wandelement verbunden, so dass das Wandelement über die erste Stirnseite des Käfigelements hinaus ragt und mit dem Käfigelement kraftschlüssig verbunden ist. Zudem ist es bevorzugt, das Verbindungselement in das Käfigelement durch die Installationsöffnung oder durch eine Zentralöffnung in der ersten Stirnseite in den Aufnahmeraum einzusetzen.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Fig. 1: eine perspektivische Darstellung eines bevorzugten Käfigelements,
- Fig. 2: eine perspektivische Darstellung eines bevorzugten Wandelements,
- Fig. 3: eine perspektivische Darstellung eines bevorzugten Verstärkungselements,
- Fig. 4: eine perspektivische Darstellung einer Anordnung des Wandelements gemäß Fig. 2 im Käfigelement gemäß Fig. 1,
- Fig. 5: eine perspektivische Darstellung eines Ausschnitts der Klebefläche des Käfigelements mit Wandelement gemäß Fig. 4,
- Fig. 6: eine perspektivische Darstellung der Klebefläche gemäß Fig. 5 mit aufgetragenem Klebstoff,
- Fig. 7a bis 7c: einzelne Abschnitte des Montageverfahrens des Befestigungselements auf der Oberfläche eines Bauteils,
- Fig. 8: eine Schnittdarstellung eines erfindungsgemäß bevorzugten Käfigelements mit Wandelement gemäß Fig. 7a,
- Fig. 9: eine Schnittdarstellung eines erfindungsgemäß bevorzugten Käfigelements mit Wandelement gemäß Fig. 7b,
- Fig. 10: eine erfindungsgemäß bevorzugte Schnittdarstellung eines Käfigelements mit Wandelement und installiertem Verbindungselement ähnlich Fig. 7c,
- Fig. 11: eine weitere Schnittdarstellung des erfindungsgemäß bevorzugten Käfigelements mit Wandelement während der Installation des Verbindungselements in der Installationsöffnung,
- Fig. 12: eine Schnittdarstellung des erfindungsgemäß bevorzugten Käfigelements mit Wandelement und installiertem Verbindungselement,
- Fig. 13: eine weitere bevorzugte Ausführungsform des Käfigelements mit Wandelement in einer noch nicht aufgeklebten Anordnung,
- Fig. 14: die Ausführungsform gemäß Fig. 13 in einer auf der Bauteiloberfläche aufgeklebten Situation,

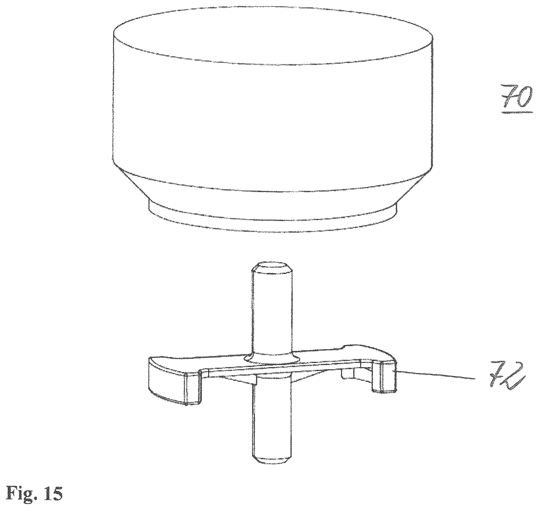

- Fig. 15: eine perspektivische Darstellung einer bevorzugten Ausführungsform eines Geräts zur Installation des Käfigelements mit Wandelement auf einem Bauteil,
- Fig. 16: eine perspektivische Darstellung der Vorrichtung gemäß Fig. 15 vorbereitet zur Anordnung des Käfigelements mit Wandelement,
- Fig. 17: eine Ausschnittsvergrößerung des Käfigelements mit Wandelement, das in der Vorrichtung gemäß Fig. 15 installiert ist,
- Fig. 18 A, B: zwei bevorzugte Ausführungsformen des Montageverfahrens des Käfigelements auf einer Bauteiloberfläche als Flussdiagramm und
- Fig. 19: eine bevorzugte Ausführungsform des Herstellungsverfahrens des Befestigungselements als Flussdiagramm

### 5. Detaillierte Beschreibung der bevorzugten Ausführungsformen

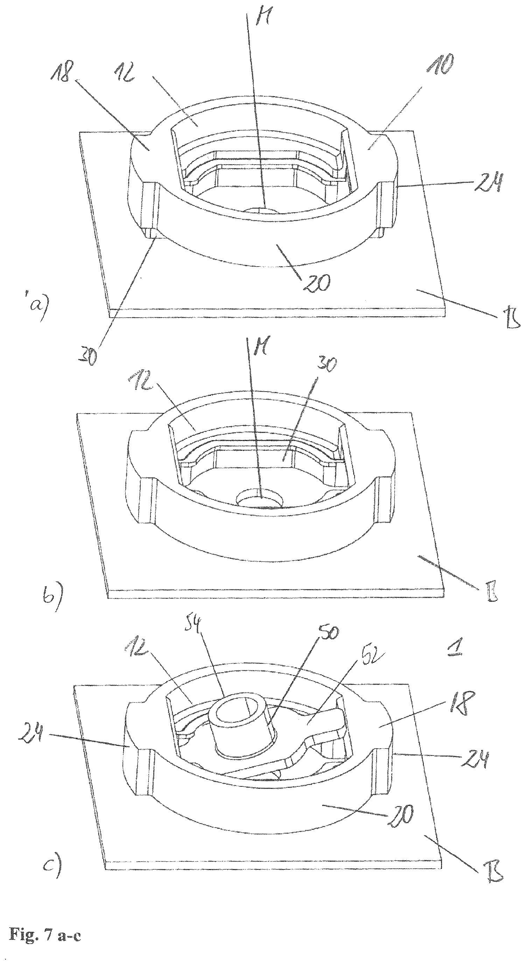

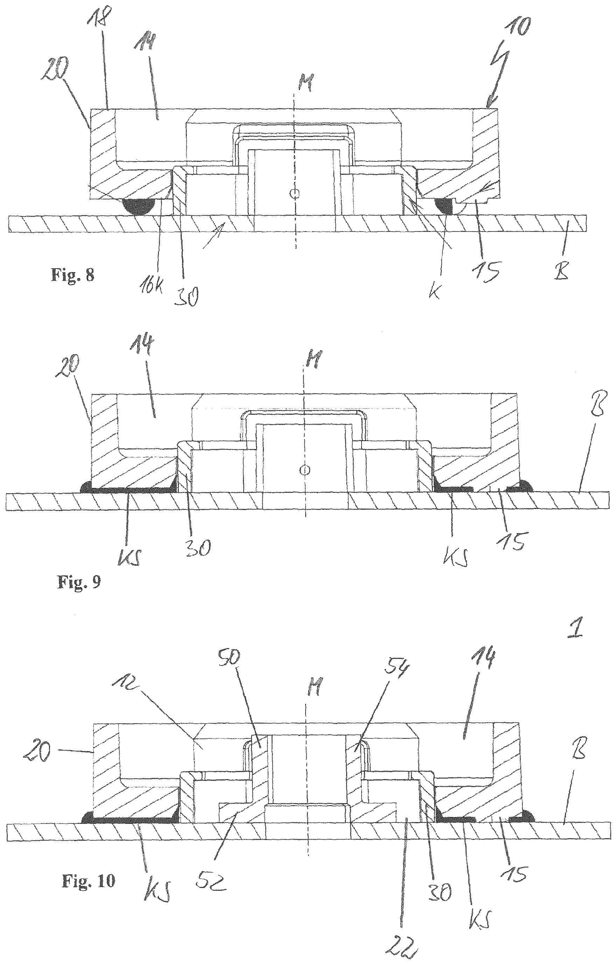

Eine bevorzugte Ausführungsform des erfindungsgemäßen Befestigungselements 1 ist in einer perspektivischen Ansicht in Figur 7c und in einer axialen Schnittansicht in den Figuren 10 bis 12 dargestellt. Es besteht aus einem Käfigelement 10, in dem ein Verbindungselement 50 in einem Aufnahmeraum 12 formschlüssig schwimmend gehalten ist.

Das Verbindungselement 50 besteht vorzugsweise aus einem tellerförmigen Flansch 52 und einem Verbindungsabschnitt 54. Der tellerförmige Flansch 52 hat eine seitliche oder radiale Ausdehnung, die an die Innenmaße des Aufnahmeraums 12 angepasst ist. Da die Ausdehnung des tellerförmigen Flansches 52 bevorzugt geringfügig größer ist als ein maximaler Durchmesser einer Installationsöffnung 14 im Käfigelement 10, wird der tellerförmige Flansch 52 formschlüssig im Aufnahmeraum 12 gehalten. Trotz dieser Größenunterschiede ist das Verbindungselement 50 über die Installationsöffnung 14 im Aufnahmeraum 12 installierbar, wie unten näher erläutert ist.

Der Verbindungsabschnitt 54 ist bevorzugt als Gewindehülse mit Innengewinde ausgebildet. Gemäß einer weiteren bevorzugten Ausführungsform ist ein Bajonett- oder Rastverschluss am Verbindungsabschnitt 54 vorgesehen. Weiterhin bevorzugt ist der Verbindungsabschnitt 54, eine standardisierte Metallmutter, eine Kunststoffmutter oder ein hohlzylindrischer Kunststoffdom mit Innengewinde und gewindeverstärkendem Drahtgewindeeinsatz. Zudem sind auch alle anderen bekannten Befestigungsmöglichkeiten nutzbar, mit denen ein Bauteil an einem anderen Bauteil befestigbar ist. Um der herzustellenden Verbindung eine ausreichende Stabilität zu geben, besteht das schwimmend angeordnete Verbindungselement 50 bevorzugt aus Metall oder aus Kunststoff.

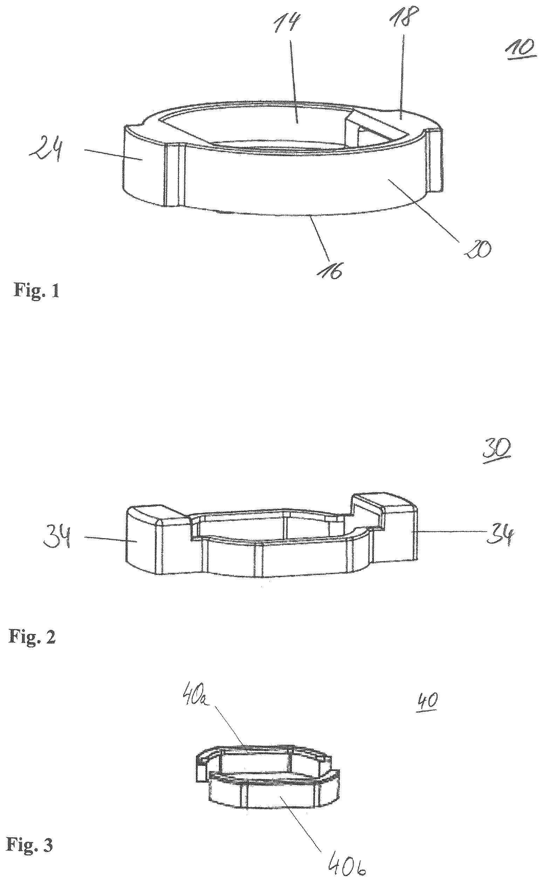

Das Käfigelement 10 ist vorzugsweise eine mittels Spritzguss hergestellte ringartige Konstruktion, wie sie gemäß einer Ausführungsform vorliegender Erfindung in Figur 1 gezeigt ist. Sie besteht vorzugsweise aus Kunststoff, faserverstärktem Kunststoff oder einem Kunststoff mit Metallverstärkung. Gemäß einer weiteren Alternative besteht das Käfigelement 10, 10' aus Metall und wird mittels Druckguss oder als Stanzbiegeteil hergestellt.

Das Käfigelement 10 umfasst eine umlaufende Begrenzungswand 20, die eine erste Stirnseite 16 und eine zweite Stirnseite 18 miteinander verbindet. Die Stirnseiten 16, 18 und die Begrenzungswand 20 schließen den bereits oben genannten Aufnahmeraum 12 ein.

In der zweiten Stirnseite 18 ist eine Installationsöffnung 14 vorgesehen, durch die das Verbindungselement 50 im Aufnahmeraum 12 installierbar ist. Die Installationsöffnung 14 dient ebenfalls bevorzugt dem Austauschen des Verbindungselements 50 im Aufnahmeraum 12. Dazu wird das Verbindungselement 50 durch die Installationsöffnung 14 aus dem Aufnahmeraum 12 entfernt und ein anderes Verbindungselement 50 wird durch die Installationsöffnung 14 in den Aufnahmeraum 12 eingesetzt. Trotz der Installationsöffnung 14 in der zweiten Stirnseite 18 und einer Öffnung 22 in der ersten Stirnseite 16 ist der tellerförmige Flansch 52 des Verbindungselement 50 formschlüssig im Aufnahmeraum 12 haltbar. Zu diesem Zweck ist die laterale bzw. radiale Ausdehnung des tellerförmigen Flansches 52 gleich einem Durchmesser des Aufnahmeraums 12, also gleich dem Abstand zweier diametral einander gegenüberliegend angeordneter Segmente der Begrenzungswand 20. Da zumindest die zweite Stirnseite 18 radial einwärts über die Begrenzungswand 20 hinaus in die Installationsöffnung 14 ragt, ist der Durchmesser der Installationsöffnung 14 bevorzugt kleiner als die laterale Ausdehnung des tellerförmigen Flansches 52. Zudem ist es bevorzugt, das Verbindungselement 50 anstatt über die Installationsöffnung 14 über die Öffnung 22 in der ersten Stirnseite 16 in den Aufnahmeraum 12 einzusetzen. Dies erfolgt, wenn das Käfigelement 10 noch nicht auf dem Bauteil aufgeklebt ist. Um das Verbindungselement 50 nach der Installation durch die Installationsöffnung 14 oder die Öffnung 22 im noch nicht aufgeklebten Zustand des Käfigelements 10 im Käfigelement 10 halten zu können, sind die bereits oben diskutierten Rastnasen oder Haltestege vorgesehen, die in den Aufnahmeraum 12 ragen.

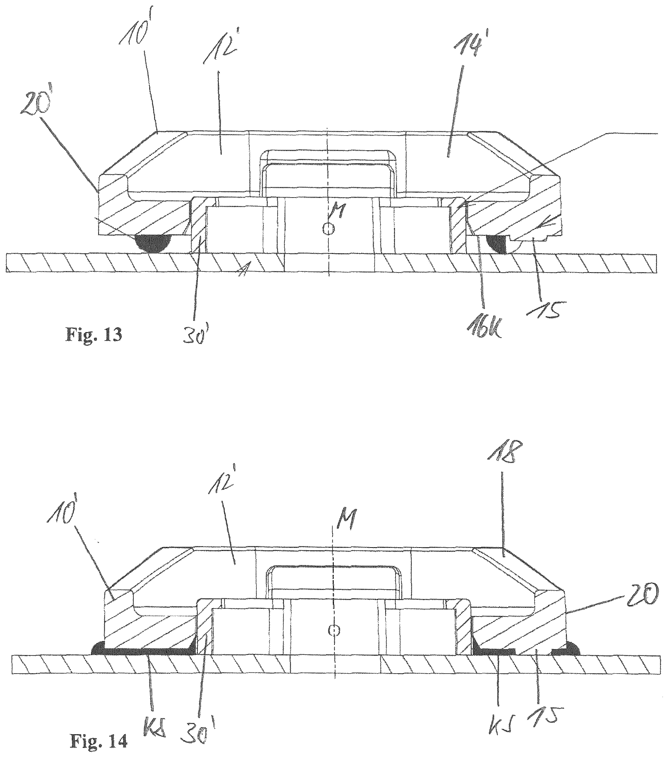

Während in Figur 1 das Käfigelement 10 elliptisch-ringförmig dargestellt ist, sind auch andere Formen bevorzugt, die die Definition eines inneren Aufnahmeraums 12 gestatten. So ist vorzugsweise die umfängliche Gestalt des Aufnahmeraums 12' viereckig, wie es in den Figuren 13 und 14 gezeigt ist, oder polygonal, dreieckig, rund oder elliptisch. Diese Form sollte in Abstimmung mit dem zur Verfügung stehenden Platz am Bauteil B gewählt werden.

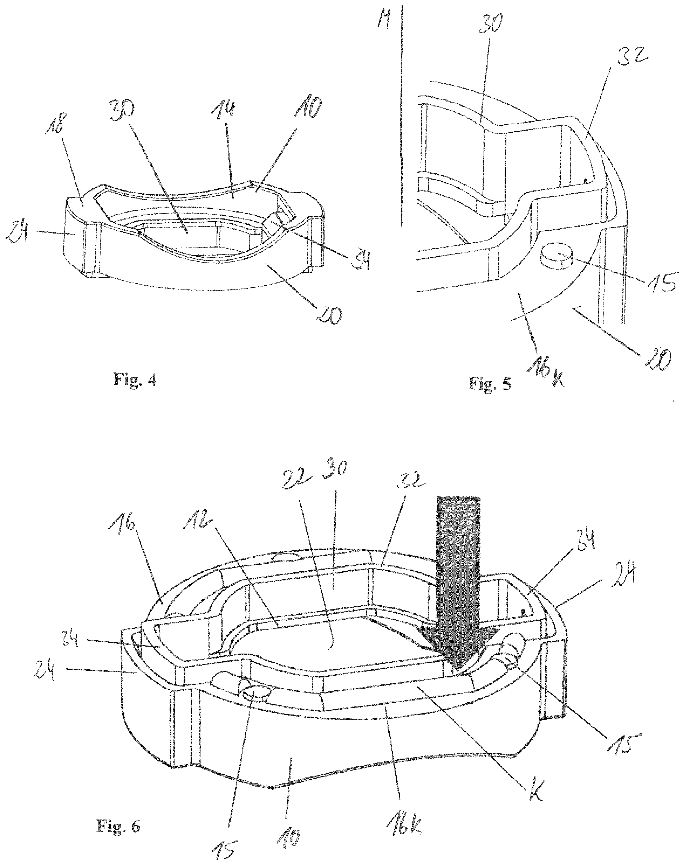

Die dem Bauteil B zugewandte erste Stirnseite 16 ist vollständig oder teilweise als Klebefläche 16k ausgestaltet, wie in Figur 6 veranschaulicht ist. Auf die Klebefläche 16k wird bevorzugt ein Klebstoff K aufgebracht, um das Käfigelement 10; 10' an der Bauteiloberfläche des Bauteils B zu befestigen. Es ist ebenfalls bevorzugt, den Klebstoff K zusätzlich oder ausschließlich auf der Bauteiloberfläche aufzutragen. Um das Aufkleben des Käfigelements 10 zu unterstützen, sind an der Klebefläche 16k Vorsprünge 15 vorgesehen. Die Vorsprünge 15 definieren bevorzugt über ihre Höhe bezogen auf die Klebefläche 16k die Dicke der befestigenden Klebeschicht KS, die sich während des Montageverfahrens zwischen der Klebefläche 16k und der Oberfläche des Bauteils B ausbildet.

In den Figuren 4 bis 6 ist erkennbar, dass vorzugsweise ein Wandelement 30 innerhalb des Aufnahmeraums 12 angeordnet ist. Das Wandelement 30 ist ähnlich einem umfänglich umlaufenden Streifen ausgebildet, der parallel zur Begrenzungswand 18 an deren radialer Innenseite verläuft. Das Wandelement 30 ist über eine Reibschlussverbindung am Käfigelement 10 gehalten und daher bei einer ausreichend großen Kraft parallel zur Mittelachse M des Käfigelements 10 (siehe Fig. 5) in Richtung der Mittelachse M versetzbar. Eine derartige Kraft wird vorzugsweise beim Aufkleben des Käfigelements 10 oder des Befestigungselements 1 auf dem Bauteil B auf eine dem Bauteil B zugewandte Stirnseite 32 des Wandelements 30 ausgeübt. Aufgrund dieser Kraftwirkung wird bevorzugt das Wandelement 30 aus einer über die Klebefläche 16k hinausragenden Position in den Aufnahmeraum 12 versetzt. Dabei wird die Stirnseite 32 vorzugsweise bis auf Höhe fluchtend mit den bevorzugten Vorsprüngen 15 oder mit der Klebefläche 16k in den Aufnahmeraum 12 versetzt. Dies ist in den Figuren 8 bis 10 sowie 13 bis 14 deutlich erkennbar.

In seiner vorstehenden Position (siehe Fig. 6) wirkt das Wandelement 30 als Kragen. Dieser Kragen schützt den Aufnahmeraum 12 vor dem Klebstoff K auf der Klebefläche 16k, der während des Aufklebens auf das Bauteil B radial einwärts verdrängt wird. Da das Wandelement 30 während des Aufklebens eine analoge Gegenbewegung zur Aufsetz- bzw. Aufklebebewegung des Käfigelements 10 ausführt, ist der Aufnahmeraum 12 über diese gesamte Aufklebephase über die Kragenwirkung des Wandelements 30 gegen den Klebstoff K abgeschirmt.

In Anpassung an die Form des Käfigelements 10 ist das Wandelement 30 in seiner äußeren Gestalt ringförmig, kreisförmig, elliptisch, polygonal oder ähnlich ausgebildet.

Es ist ebenfalls bevorzugt, das Wandelement 30 in einer anderen Gestalt als das Käfigelement 10 auszubilden. Es muss lediglich gewährleistet sein, dass das Wandelement 30 reibschlüssig oder anderweitig kontrolliert versetzbar an der radialen Innenseite des Käfigelements 10 gehalten ist. Zudem muss in ähnlicher Weise wie in den oben beschriebenen Ausführungsformen gewährleistet sein, dass der Aufnahmeraum 12 und im Speziellen das Verbindungselement 50 gegen den Klebstoff K abgeschirmt wird. Somit wäre es ebenfalls im Sinne vorliegender Erfindung, wenn der durch das Wandelement 30 eingeschlossene Raum gerade groß genug ist, um das Verbindungselement 50, vorzugsweise dessen tellerförmigen Flansch 52, aufzunehmen. Dazu kann sich das Käfigelement 10 in einer anderen Formgestaltung und Größe um das Wandelement 30 herum erstrecken.

Wie bereits oben erläutert worden ist, wird das Verbindungselement 50 formschlüssig und schwimmend im Aufnahmeraum 12 gehalten. Schwimmend bedeutet in diesem Zusammenhang, dass das Verbindungselement 50 innerhalb des Aufnahmeraums 12 gewisse laterale und/oder axiale Bewegungen ausführen kann. Dies gewährleistet eine einfache und genaue Ausrichtung des Verbindungselements 50 auf die Bauteilöffnung und ein dort hindurch ragendes Verbindungsmittel, wie ein Gewindebolzen.

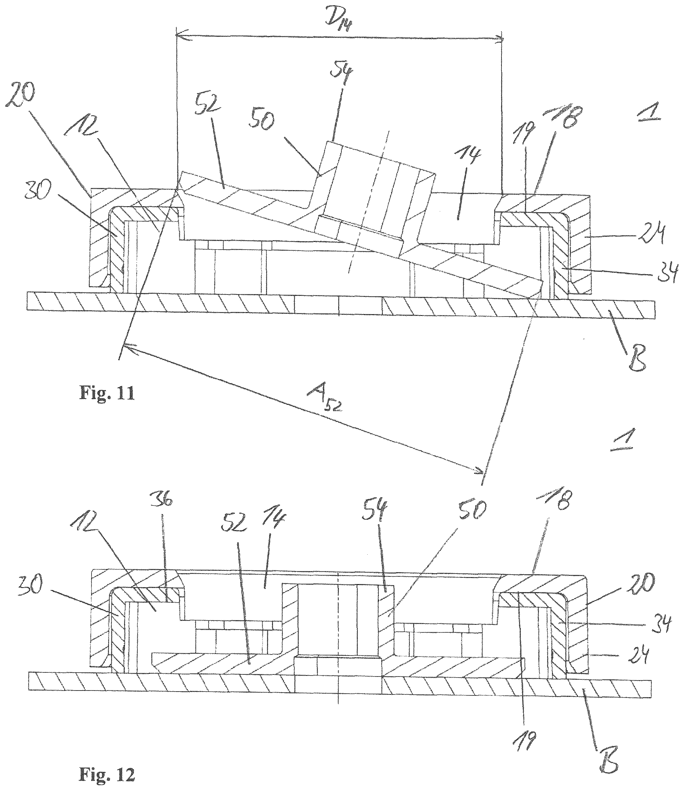

Vorzugsweise ist die Installationsöffnung 14 in der zweiten Stirnseite 18 des Käfigelements 10 mit einem maximalen Durchmesser D₁₄ ausgestattet. Selbst wenn der maximale Durchmesser D₁₄ aufgrund der Form der Installationsöffnung 14 variiert, ist er immer kleiner als eine laterale Ausdehnung A₅₂ des tellerförmigen Flansches des Verbindungselements 50. Dies gewährleistet die formschlüssige Aufnahme des Verbindungselements 50 im Aufnahmeraum 12. Um das Verbindungselement 50 dennoch durch die Installationsöffnung 14 im Aufnahmeraum 12 installieren zu können, umfasst das Käfigelement 14 und vorzugsweise auch das Wandelement 30 bevorzugt mindestens eine radiale Tasche oder Ausbuchtung 24, 34, vorzugsweise zwei einander diametral gegenüberliegend angeordnete Taschen. Alternativ zu den Taschen 24 aber in ähnlicher konstruktiver Anordnung wie in Fig. 11 ist es ebenfalls bevorzugt, dass die zweite Stirnseite 18 auch ohne Taschen den Aufnahmeraum 12 teilweise überdeckt, bevor sie durch die Installationsöffnung 14 durchbrochen ist. Diese überdeckende zweite Stirnseite 18 liefert mit ihrer Unterseite 19 allein oder in Kombination mit dem Wandelement 30 ausreichend Halt für den Befestigungsflansch 52 des Verbindungselements 50. Bei einer schrägen Anordnung des Verbindungselements 50 (siehe Fig. 11) in Bezug auf die dem Bauteil abgewandte zweite Stirnseite 18 vergrößert die radiale Tiefe der Tasche 24, 34 die Installationsöffnung 14 um mindestens den Differenzbetrag zwischen dem Durchmesser der Installationsöffnung 12 und der lateralen Ausdehnung A₅₂ des tellerförmigen Flansches 52. Somit ist das Verbindungselement 50 in schräger Anordnung im Aufnahmeraum 12 installierbar bzw. einfädelbar. Da im installierten Zustand des Befestigungselements 1 und in normaler schwerkraftbestimmter Ausrichtung der tellerförmige Flansch 52 parallel zur Installationsöffnung 14 angeordnet ist, kann das Verbindungselement 50 nicht zufällig aus dem Aufnahmeraum 12 gelöst werden.

Gemäß einer weiteren bevorzugten Ausführungsform ist der Befestigungsflansch 52 in seiner lateralen Ausdehnung nur geringfügig größer als die Installationsöffnung 14. Setzt man den Befestigungsflansch 52 an der Installationsöffnung 14 an und drückt ihn dann durch die Installationsöffnung 14, dann schnappt der Befestigungsflansch bevorzugt in den Aufnahmeraum 12 ein. Dieses bevorzugte Einschnappen, welches durch eine federnde Flexibilität zumindest eines der radial außen angeordneten Enden des Befestigungsflansches 52 unterstützt wird, kann durch Schrägen 14s am Rand der Installationsöffnung 14 und angrenzend in die zweite Stirnfläche 18 unterstützt sein. Die Schrägen 14s sind in den Figuren 1, 7, 11 und 12 erkennbar. Sollte bevorzugt das Verbindungselement 50 in Umkehr des oben beschriebenen Installierens durch Einschnappen aus dem Aufnahmeraum 12 heraus gerastet oder geschnappt werden, dann sind ebenfalls Schrägen angrenzend an die Unterseite 19 und die Installationsöffnung 14 vorgesehen.

Des Weiteren besteht die bevorzugte Möglichkeit, das Verbindungselement 50 über die Öffnung 22 in der ersten Stirnseite 16 einzusetzen, bevor das Käfigelement 10 aufgeklebt wird. Nachdem das Verbindungselement 50 im Aufnahmeraum 12 installiert worden ist, wird der tellerförmige Flansch 52 vorzugsweise durch die Unterseite 19 der zweiten Stirnseite 18 gehalten. Es ist ebenfalls bevorzugt, dass das Verbindungselement 50 durch eine Unterseite 36 einer Stirnseite 35 des Wandelements 30 gehalten wird. Die Ausgestaltung des Wandelements 30 mit einem parallel zur zweiten Stirnseite 18 verlaufenden Stirnseite 35 ist aber optional, da die Hauptfunktion des Wandelements 30 in der Abschirmung des Aufnahmeraums 12 gegen Klebstoff besteht. Gemäß einer weiteren bevorzugten Ausführungsform vorliegender Erfindung weist das Käfigelement 10 und/oder das Wandelement 30 eine Mehrzahl radial einwärts in den Aufnahmeraum 12 ragender Rastnasen (nicht gezeigt) auf. Diese Rastnasen sind elastisch verformbar, sodass die Rastnasen beim Einsetzen des Verbindungselements 50 durch die Öffnung 22 durch den Flansch 52 überwunden werden können. Danach wird das Verbindungselement 50 zwischen der zweiten Stirnseite 18 und den Rastnasen schwimmend im Aufnahmeraum 12 gehalten. In gleicher Weise wird bevorzugt ein Verbindungselement 50 gehalten, das über die Installationsöffnung 14 in den Aufnahmeraum 12 eingesetzt worden ist. Mit Hilfe der Rastnasen ist es ebenfalls bevorzugt möglich, das Befestigungselement 1 bestehend aus Käfigelement 10, Wandelement 30 und Verbindungselement 50 als vormontierte Einheit bereitzustellen. Alternativ zu den Rastnasen ist ebenfalls bevorzugt ein umlaufender Haltesteg oder eine Mehrzahl umfänglich angeordneter Haltestege (nicht gezeigt) verwendbar. Diese ragen in gleicher Weise wie die oben genannten Rastnasen in den Aufnahmeraum 12 und verhindern ein Herausfallen des Verbindungselements 50 aus dem Aufnahmeraum 12, egal, ob es über die Installationsöffnung 14 oder die Öffnung 22 darin eingesetzt worden ist.

Bezugnehmend auf Figur 3 ist die bevorzugte Ausführungsform eines zusätzlichen Stützelements 40 gezeigt. Dieses zusätzliche Stützelement 40 besteht aus einem starren Material, wie Metall, faserverstärktem Kunststoff oder dergleichen. Es dient der Stabilisierung der Kombination aus Begrenzungswand 20 und Wandelement 30 oder nur der Stabilisierung des Wandelements 30. Ist das Verbindungselement 50 beispielsweise als Mutter ausgestaltet, dann stützt sich der Flansch 52 beim Eindrehen eines Gewindebolzens in die Mutter 50 an der radialen Innenseite des Wandelements 30 gegen ein Mitdrehen der Mutter 50 ab. Um diesen Kräften zu widerstehen, muss das Wandelement 30 ausreichend stabil aufgebaut oder durch das zusätzliche Stützelement 40 gestützt werden. Entsprechend ist bevorzugt das zusätzliche Stützelement 40 als Klammer mit zwei Schenkeln (nicht gezeigt), als umlaufendes Stützelement oder als zwei zueinander passende zusätzliche Stützelemente 40a, 40b (Fig. 3) ausgeführt. Das zusätzliche Stützelement 40 wird vorzugsweise zwischen der Begrenzungswand 20 und dem Wandelement 30 angeordnet. Gemäß einer anderen Alternative wird das zusätzliche Stützelement 40 an der radialen Innenseite des Wandelements 30 angeordnet. Dabei wird das zusätzliche Stützelement 40 vorzugsweise über Reibschluss oder eine Klebeverbindung gehalten. Es ist ebenfalls bevorzugt, das zusätzliche Stützelement 40 in das Wandelement 30 einzubetten.

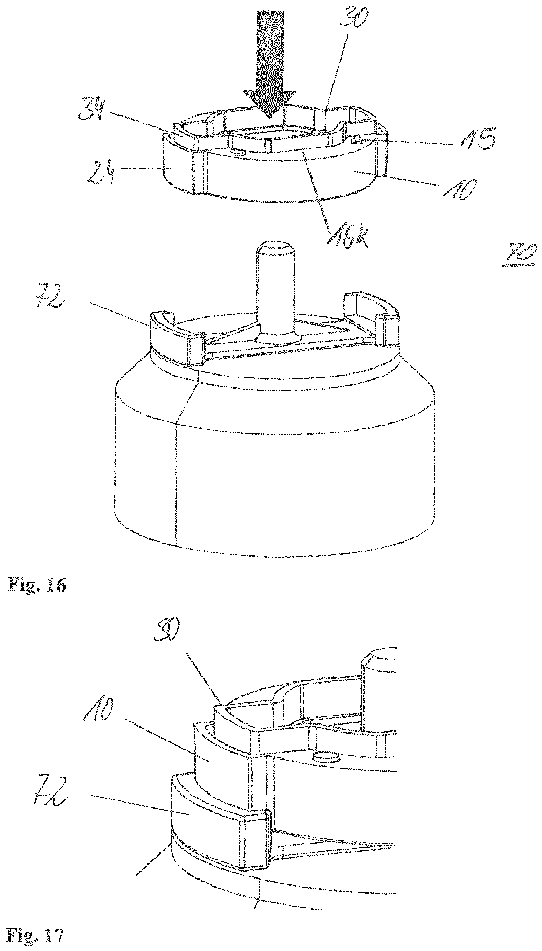

Weiterhin bevorzugt wird das Käfigelement 10 in Kombination mit dem Wandelement 30 mithilfe einer manuellen Montagevorrichtung 70 oder einem Roboter in Kombination mit dieser Montagevorrichtung 70 montiert. Die Montagevorrichtung 70 ist schematisch in Figur 16 gezeigt. Die Montagevorrichtung 70 besitzt eine Haltevorrichtung 72, in die das Käfigelement 10 einspannbar ist. Bevorzugt wird das Käfigelement 10 mittels lichtempfindlichem Klebstoff K und/oder wärmeempfindlichen Klebstoff K auf der Bauteiloberfläche befestigt. Dazu umfasst die Montagevorrichtung 70 eine entsprechende Licht- und/oder Wärmequelle.

Nachdem das Käfigelement 10 gemäß einer der oben beschriebenen bevorzugten Ausführungsformen in einem ersten Schritt M1 bereitgestellt worden ist, wird Klebstoff K auf die Klebefläche 16k und/oder eine Bauteiloberfläche im Schritt M2 aufgebracht. Das Aufbringen des Klebstoffs im Schritt M2 kann, vor oder nachdem das Käfigelement 10 in der Haltevorrichtung 72 der Montagevorrichtung 70 angeordnet worden ist, stattfinden. Nachfolgend wird im Schritt M4 das Käfigelement 10 mit der Klebefläche 16k auf der Bauteiloberfläche des Bauteils B positioniert. Beim Andrücken des Käfigelements 10 an die Bauteiloberfläche erfolgt im Schritt M3 ein Versetzen des Wandelements 30 aus der über die Klebefläche 16k axial vorstehenden Position in den Aufnahmeraum 12, so dass der Eintritt von Klebstoff K in den Aufnahmeraum 12 während dieses Vorgangs verhindert ist. Bei diesem Versetzen werden bevorzugt die Abrissstege zwischen Käfigelement 10 und Wandelement 30 getrennt, um die Position des Wandelements 30 ändern zu können. Nachdem das Käfigelement 10 passend positioniert worden ist, wird im Schritt M5 der Klebstoff K mithilfe von Licht und/oder Wärme und/oder mittels Zeitablauf und/oder zusätzlichem Druck auf die Klebestelle ausgehärtet.

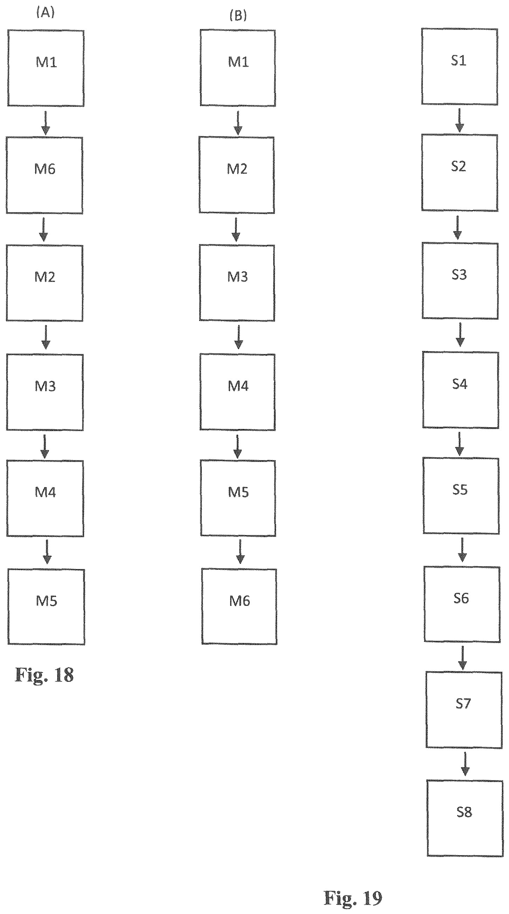

Im Rahmen des Montageverfahrens ist es erfindungsgemäß bevorzugt, das Verbindungselement 50 im Aufnahmeraum 12 zu installieren, nachdem das Käfigelement 10 auf der Bauteiloberfläche aufgeklebt worden ist (Schritt M6 in der Verfahrensalternative in Fig. 18 B). In gleicher Weise ist es ebenfalls bevorzugt, noch vor dem Aufkleben des Käfigelements 10 auf der Bauteiloberfläche das Verbindungselement 50 durch die Öffnung 22 in der ersten Stirnseite 16 oder durch die Installationsöffnung 14 in der zweiten Stirnseite 18 im Aufnahmeraum 12 anzuordnen (Schritt M6 in der Verfahrensalternative in Fig. 18 A). Nachdem das Käfigelement 10 vorzugsweise mit der Klebefläche 16k angrenzend an die Bauteilöffnung positioniert und befestigt worden ist, wird eine Schraube oder ein Gewindebolzen oder ein anderes passendes Verbindungsmittel in dem Verbindungselement 50 befestigt, im Speziellen eingeschraubt, bis das Verbindungselement 50 auf der Bauteiloberfläche aufliegt. Im Speziellen wird hier die Kombination einer Mutter mit Befestigungsflansch und eines Gewindebolzens genutzt. Dabei besteht die Mutter vorzugsweise aus Metall, Kunststoff, faserverstärktem Kunststoff oder sie setzt sich aus einem Kunststoffdom mit Gewindeeinsatz oder aus einer Kunststoffhülse mit einem das Innengewinde verstärkenden Drahtgewindeeinsatz zusammen. Zusammenfassend ist der Ablauf des Montageverfahrens in dem Flussdiagramm 18 exemplarisch erläutert.

Wie oben bereits gezeigt worden ist, werden das Käfigelement 10 sowie das Wandelement 30 mithilfe eines Spritzgussverfahrens hergestellt. Zu diesem Zweck wird für das Käfigelement 10 eine erste Spritzgussform im Schritt S1 bereitgestellt. Im Schritt S2 erfolgt dann das Spritzgießen des Käfigelements 10 in der ersten Spritzgussform, wobei im Schritt S3 das Käfigelement 10 aus der ersten Spritzgussform entformt wird. Gemäß Schritt S4 wird eine zweite Spritzgussform bereitgestellt, um das Wandelement 30 herzustellen. Nachdem das Wandelement 30 in der zweiten Spritzgussform spritzgegossen worden ist (Schritt S5), wird auch das Wandelement 30 aus der Spritzgussform entformt (Schritt S6). Nachfolgend werden im Schritt S7 das Käfigelement 10 und das Wandelement 30 derart miteinander verbunden, dass das Wandelement 30 über die erste Stirnseite 16 des Käfigelements 10 hinaus ragt und mit dem Käfigelement 10 kraftschlüssig verbunden ist.

Weiterhin bevorzugt wird das Käfigelement 10 in Kombination mit dem Wandelement 30 in einem 2K Spritzgussverfahren hergestellt. Dabei werden in einem Kombiwerkzeug bzw. einer passenden Spritzgussform mit zwei unterschiedlichen Materialschüssen, diese können aus unterschiedlichen Kunststoffen oder dem gleichen Kunststoff bestehen, nacheinander das Käfigelement 10 und das Wandelement 30 hergestellt. Nach diesem Herstellungsverfahren liegen das Käfigelement 10 und das Wandelement 30 lagerichtig angeordnet und quasi vormontiert vor. Die erforderliche relative Bewegbarkeit zwischen dem Käfigelement 10 und dem Wandelement 30 beim Aufsetzen und Aufkleben des Käfigelements 10 auf der Bauteiloberfläche wird durch abreißbare Verbindungsstege (nicht gezeigt) zwischen Käfigelement 10 und Wandelement 30 realisiert. Es ist ebenfalls bevorzugt, das Käfigelement 10 und das Wandelement 30 durch eine nur anhaftende Verbindung (Adhäsion) des zweiten Materialschusses für das Wandelement 30 am Käfigelement 12 zu verbinden. Dazu ist es erforderlich, dass der erste Materialschuss für das Käfigelement 12 bereits ausreichend abgekühlt ist, so dass keine Kohäsion mehr zwischen Käfigelement 10 und Wandelement 30 möglich ist.

Gemäß einer bevorzugten Ausführungsform des vorliegenden Herstellungsverfahrens wird das Käfigelement 10 in Kombination mit dem Wandelement 30 als Schüttgut weitertransportiert, um dann an einer Bauteiloberfläche befestigt zu werden. Nach Befestigung auf der Bauteiloberfläche wird dann das Verbindungselement 50 in das Käfigelement durch die Installationsöffnung 14 eingesetzt. Es ist ebenfalls bevorzugt, noch vor dem Transport des Käfigelements 10 in Kombination mit dem Wandelement 30 das Verbindungselement 50 darin einzusetzen. Dieses Einsetzen kann sowohl über die Installationsöffnung 14 wie auch über die Öffnung 22 in der ersten Stirnseite 16 erfolgen. In gleicher Weise ist es bevorzugt, das Verbindungselement 50 durch die Installationsöffnung oder durch die Öffnung in der ersten Stirnseite 16 im Käfigelement 10 anzuordnen, kurz bevor das Käfigelement 10 als Befestigungselement 1 auf der Bauteiloberfläche befestigt wird. Eine Zusammenfassung des Herstellungsverfahrens findet sich im Flussdiagramm der Figur 19.

### Bezugszeichenliste

- 1: Befestigungselement
- 10: Käfigelement
- 12, 12': Aufnahmeraum
- 14: Installationsöffnung
- 15: Vorsprung
- 16: erste Stirnseite
- 16k: Klebefläche
- 18: zweite Stirnseite
- 19: Unterseite
- 20: Begrenzungswand
- 22: Öffnung in der ersten Stirnseite
- 24: Tasche
- 30: Wandelement
- 34: Tasche
- 36: Unterseite
- 40: Stützelement
- 50: Verbindungselement
- 52: tellerförmiger Flansch
- 54: Verbindungsabschnitt
- 70: Montagevorrichtung
- 72: Haltevorrichtung
- K: Kleber
- KS: Klebeschicht
- B: Bauteil

## Patentansprüche

1. Käfigelement (10) für ein Befestigungselement (1), das die folgenden Merkmale aufweist:
a. eine erste (16) und eine zweite einander gegenüberliegend angeordnete Stirnseite (18) und
b. die erste Stirnseite (16) bildet zumindest teilweise eine Klebefläche (16k) zum Befestigen des Käfigelements (10) an einem Bauteil (B), **dadurch gekennzeichnet, dass**
c. die erste (16) und die zweite einander gegenüberliegend angeordnete Stirnseite (18) über eine umlaufende Begrenzungswand (20) miteinander verbunden sind, um einen Aufnahmeraum (12, 12') für ein Verbindungselement (50) zu definieren und
d. die zweite Stirnfläche (18) weist eine Installationsöffnung (14) für ein Verbindungselement (50) auf, wobei
e. ein Verbindungselement (50) durch die Installationsöffnung (14) im Aufnahmeraum (12, 12') aufnehmbar und dort formschlüssig schwimmend haltbar ist und
f. ein Wandelement (30) im Aufnahmeraum (12, 12') des Käfigelements (10) verschiebbar und zumindest teilweise radial angrenzend an die Begrenzungswand (20) angeordnet ist.

2. Käfigelement (10) gemäß Patentanspruch 1, in dem das Wandelement (30) senkrecht zur Klebefläche (16k) zwischen einer über die erste Stirnfläche (16) axial vorstehende Position und einer im Aufnahmeraum (12, 12') aufgenommenen Position versetzbar ist.

3. Käfigelement (10) gemäß Patentanspruch 2, in dem das Wandelement (30) in der vorstehenden Position einen versetzbaren Kragen angrenzend an die Klebefläche (16k) bildet, der einen Eintritt von Klebstoff (K) in den Aufnahmeraum (12, 12') verhindert.

4. Käfigelement (10) gemäß einem der Patentansprüche 1 bis 3, in dem der Aufnahmeraum (12, 12') mindestens eine radiale Ausbuchtung aufweist, über die das Verbindungselement (50) durch die Installationsöffnung (14) einsetzbar ist.

5. Käfigelement (10) gemäß einem der vorhergehenden Patentansprüche, in dem das Verbindungselement (50) eine Gewindehülse mit einer asymmetrischen tellerähnlichen Endfläche ist.

6. Käfigelement (10) gemäß einem der vorhergehenden Patentansprüche, in dem das Käfigelement (10) aus lichtdurchlässigem Kunststoff besteht.

7. Käfigelement (10) gemäß einem der vorhergehenden Patentansprüche, in dem das Wandelement (30) aus Metall oder Kunststoff besteht, so dass die Begrenzungswand (20) stabilisiert ist.

8. Käfigelement (10) gemäß einem der vorhergehenden Patentansprüche, in dem das Wandelement (30) kraftschlüssig angrenzend an die Begrenzungswand (20) gehalten ist.

9. Käfigelement (10) gemäß einem der vorhergehenden Patentansprüche, in dem die Klebefläche (16k) eine Mehrzahl von Vorsprüngen aufweist, die als Abstandshalter zu einer Bauteiloberfläche dienen.

10. Befestigungselement (1), insbesondere eine Käfigmutter (10), das die folgenden Merkmale aufweist:
a. ein Käfigelement (10) gemäß einem der vorhergehenden Patentansprüche 1 bis 9 und
b. ein Verbindungselement (50), das durch die Installationsöffnung (14) der zweiten Stirnseite (18) oder durch eine Öffnung (22) in der erste Stirnseite (16) im Aufnahmeraum (12, 12') aufnehmbar ist und das im Aufnahmeraum (12, 12') formschlüssig schwimmend gehalten ist.

11. Bauteil (B) mit einer Bauteilöffnung, an die angrenzend ein Käfigelement (10) gemäß einem der Patentansprüche 1 bis 9 oder ein Befestigungselement (1) gemäß Patentanspruch 10 auf einer Bauteiloberfläche aufgeklebt ist.

12. Montageverfahren für ein Befestigungselement (1), insbesondere ein Befestigungselement (1) gemäß Patentanspruch 10, das die folgenden Schritte aufweist:
a. Bereitstellen (M1) eines Käfigelements (10) gemäß einem der Patentansprüche 1 bis 9,
b. Aufbringen (M1) von Klebstoff (K) auf die Klebefläche (16k) der ersten Stirnseite (16) und/oder eine Bauteiloberfläche eines Bauteils (B),
c. Positionieren (M4) des Käfigelements (10) mit der Klebefläche (16k) auf der Bauteiloberfläche des Bauteils (B),
d. Aushärten (M5) des Klebstoffs (K) und
e. Installieren (M6) eines Verbindungselements (50) im Aufnahmeraum (12, 12') des Käfigelements (10).

13. Montageverfahren gemäß Patentanspruch 12, in dem das Käfigelement (10) mit einem Verbindungselement (50) bereitgestellt wird oder:
Installieren (M6) des Verbindungselements (50) im Aufnahmeraum (12, 12') durch die Installationsöffnung (14) an der zweiten Stirnseite (18) oder durch eine Öffnung (22) an der ersten Stirnseite (16) bevor das Käfigelement (10) auf der Bauteiloberfläche aufgeklebt worden ist oder Installieren (M6) eines Verbindungselements (50) im Aufnahmeraum (12, 12') durch die Installationsöffnung (14) an der zweiten Stirnseite (18) nachdem das Käfigelement (10) auf der Bauteiloberfläche aufgeklebt worden ist.

14. Montageverfahren gemäß Patentanspruch 12 oder 13, mit dem weiteren Schritt während des Positionierens des Käfigelements (10) mit der Klebefläche (16k) auf der Bauteiloberfläche:
Versetzen (M3) des Wandelements (30) aus einer über die Klebefläche (16k) axial vorstehenden Position zur Bildung eines versetzbaren Kragens angrenzend an die Klebefläche (16k) in den Aufnahmeraum (12, 12'), so dass der Eintritt von Klebstoff (K) in den Aufnahmeraum (12, 12') verhindert ist.

15. Montageverfahren gemäß einem der Patentansprüche 12 bis 14, in dem das Aushärten mittels Licht und/oder Wärme und/oder mittels Zeitablauf erfolgt.

16. Montageverfahren gemäß einem der Patentansprüche 12 bis 15, in dem das Käfigelement (10) mit der Klebefläche (16k) angrenzend an eine Bauteilöffnung positioniert wird.

17. Montageverfahren gemäß einem der vorhergehenden Patentansprüche 12 bis 16, wobei das Verbindungselement (50) eine Mutter zur Herstellung einer Schraubverbindung ist und das den weiteren Schritt aufweist:
Einschrauben einer Schraube in das Verbindungselement (50), bis das Verbindungselement (50) auf der Bauteiloberfläche aufliegt.

## Claims

1. Cage element (10) for a fastening element (1) having the following features:
a. a first (16) and a second face (18) arranged opposite each other, and
b. the first face (16) forms at least partially an adhesive surface (16k) for fastening the cage element (10) to a component (B), **characterized in that**
c. the first (16) and the second face (18) arranged opposite each other are connected to each other by a circumferential limiting wall (20) in order to define a receiving area (12, 12') for a connecting element (50) and
d. the second face (18) includes an installation opening (14) for a connecting element (50), wherein
e. a connecting element (50) is receivable in the receiving area (12, 12') through the installation opening (14) and is holdable there floatingly in a form-fit manner and
f. a wall element (30) is shiftably arranged in the receiving area (12, 12') of the cage element (10) and is arranged at least partially radially adjacent to the limiting wall (20).

2. Cage element (10) according to claim 1, in which the wall element (30) is movable perpendicularly to the adhesive surface (16k) between a position that projects axially beyond the first face (16) and a position that is received in the receiving area (12, 12').

3. Cage element (10) according to claim 2 in which in the projecting position, the wall element (30) forms a movable collar adjacent to the adhesive surface (16k) which prevents an entering of adhesive (K) into the receiving area (12, 12').

4. Cage element (10) according to one of claims 1 to 3, in which the receiving area (12, 12') includes at least one radial bulge by means of which the connecting element (50) is insertable through the installation opening (14).

5. Cage element (10) according to one of the preceding claims, in which the connecting element (50) is a threaded sleeve with an asymmetrical, plate-like end face.

6. Cage element (10) according to one of the preceding claims, in which the cage element (10) consists of light-transmissive plastic.

7. Cage element (10) according to one of the preceding claims, in which the wall element (30) consists of metal or plastic so that the limiting wall (20) is stabilized.

8. Cage element (10) according to one of the preceding claims in which the wall element (30) is held in a force-fit manner adjacent to the limiting wall (20).

9. Cage element (10) according to one of the preceding claims, in which the adhesive surface (16k) has a plurality of projections which serve as spacers to a component surface.

10. A fastening element (1), in particular a cage nut (10), having the following features:
a. a cage element (10) according to one of the preceding claims 1 to 9, and
b. a connecting element (50) that is receivable in the receiving area (12, 12') through the installation opening (14) in the second face (18) or through an opening (22) in the first face (16) and that is held floatingly in a form-fit manner in the receiving area (12, 12').

11. Component (B) with a component opening adjacent to which a cage element (10) according to one of claims 1 to 9 or a fastening element (1) according to claim 10 is adhered on a component surface.

12. Mounting method for a fastening element (1), in particular a fastening element (1) according to claim 10, that has the following steps:
a. providing (M1) a cage element (10) according to one of claims 1 to 9,
b. applying (M1) of adhesive (K) onto the adhesive surface (16k) of the first face (16) and/or a component surface of a component (B),
c. positioning (M4) the cage element (10) with the adhesive surface (16k) on the component surface of the component (B),
d. curing (M5) the adhesive (K) and
e. installing (M6) a connecting element (50) in the receiving area (12, 12') of the cage element (10).

13. Assembly method according to claim 12, in which the cage element (10) is provided with a connecting element (50) or:
installing (M6) the connecting element (50) in the receiving area (12, 12') through the installation opening (14) at the second face (18) or through an opening (22) at the first face (16) before the cage element (10) has been adhered to the component surface, or installing (M6) a connecting element (50) in the receiving area (12, 12') through the installation opening (14) at the second face (18) after the cage element (10) has been adhered to the component surface.

14. Assembly method according to claim 12 or 13, with the further step during the positioning of the cage element (10) with the adhesive surface (16k) on the component surface:
moving (M3) the wall element (30) out of a position projecting axially beyond the adhesive surface (16k) for forming a movable collar adjacent to the adhesive surface (16k) in the receiving area (12, 12') so that the entering of adhesive (K) into the receiving area (12, 12') is prevented.

15. Assembly method according to one of claims 12 to 14 in which the curing is carried out by means of light and/or heat and/or passage of time.

16. Assembly method according to one of claims 12 to 15 in which the cage element (10) is positioned adjacent to a component opening with the adhesive surface (16k).

17. Assembly method according to one of the preceding claims 12 to 16, wherein the connecting element (50) is a nut for establishing a screw connection and which includes the further step:
screwing a screw into the connecting element (50) until the connecting element (50) abuts the component surface.

## Revendications

1. Élément de cage (10) d'un élément de fixation (1), qui présente les caractéristiques suivantes :
a) un premier (16) et un second côté frontal (18) disposés en vis-à-vis et
b) le premier côté frontal (16) forme au moins en partie une face de collage (16k) servant à fixer l'élément de cage (10) à un composant (B), **caractérisé en ce que**
c) le premier (16) et le second côté frontal (18) disposés en vis-à-vis sont reliés l'un à l'autre par une paroi de limitation (20) périphérique afin de définir un espace de réception (12, 12') destiné à un élément de raccordement (50) et
d) le second côté frontal (18) présente une ouverture d'installation (14) destinée à un élément de raccordement (50), dans lequel
e) un élément de raccordement (50) peut être logé dans l'espace de réception (12, 12') à travers l'ouverture d'installation (14) et peut y être maintenu de façon flottante par complémentarité de forme et
f) un élément de paroi (30) est ajustable dans l'espace de réception (12, 12') de l'élément de cage (10) et est disposé au moins en partie de façon radialement adjacente à la paroi de limitation (20).

2. Élément de cage (10) selon la revendication 1, dans lequel l'élément de paroi (30) peut être déplacé perpendiculairement à la face de collage (16k) entre une position saillante axialement sur la première face frontale (16) et une position prise dans l'espace de réception (12, 12').

3. Élément de cage (10) selon la revendication 2, dans lequel l'élément de paroi (30) forme une collerette déplaçable adjacente à la face de collage (16k) dans la position saillante, qui empêche une entrée de colle (K) dans l'espace de réception (12, 12').

4. Élément de cage (10) selon l'une des revendications 1 à 3, dans lequel l'espace de réception (12, 12') présente au moins une indentation radiale, par le biais de laquelle l'élément de raccordement (50) est insérable à travers l'ouverture d'installation (14).

5. Élément de cage (10) selon l'une des revendications précédentes, dans lequel l'élément de raccordement (50) est une douille filetée à face d'extrémité asymétrique semblable à un plateau.

6. Élément de cage (10) selon l'une des revendications précédentes, dans lequel l'élément de cage (10) est constitué d'une matière plastique translucide.

7. Élément de cage (10) selon l'une des revendications précédentes, dans lequel l'élément de paroi (30) est constitué de métal ou de matière plastique, de sorte que la paroi de limitation (20) est stabilisée.

8. Élément de cage (10) selon l'une des revendications précédentes, dans lequel l'élément de paroi (30) est maintenu de façon adjacente à la paroi de limitation (20) par complémentarité de forme.

9. Élément de cage (10) selon l'une des revendications précédentes, dans lequel la face de collage (16k) présente de multiples épaulements, qui servent d'écarteurs par rapport à une surface de composant.

10. Élément de fixation (1), notamment un écrou encagé *(captif ou* à *cage)* (10), qui présente les caractéristiques suivantes :
a) un élément de cage (10) selon l'une des revendications précédentes 1 à 9 et
b) un élément de raccordement (50), qui peut être logé dans l'espace de réception (12, 12') à travers l'ouverture d'installation (14) du second côté frontal (18) ou à travers une ouverture (22) percée dans le premier côté frontal (16) et qui peut être maintenu dans l'espace de réception (12, 12') de façon flottante par complémentarité de forme.

11. Composant (B) avec une ouverture de composant, contre laquelle un élément de cage (10) selon l'une des revendications 1 à 9 ou un élément de fixation (1) selon la revendication 10 est collé de façon adjacente sur une surface de composant.

12. Procédé de montage d'un élément de fixation (1), notamment d'un élément de fixation (1) selon la revendication 10, qui présente les étapes suivantes :
a) la fourniture (M1) d'un élément de cage (10) selon l'une des revendications 1 à 9,
b) l'application (M1) de colle (K) sur la face de collage (16k) du premier côté frontal (16) et/ou sur une surface d'un composant (B),
c) le positionnement (M4) de l'élément de cage (10) avec la face de collage (16k) sur la surface du composant (B),
d) le durcissement (M5) de la colle (K) et
e) l'installation (M6) d'un élément de raccordement (50) dans l'espace de réception (12, 12') de l'élément de cage (10).

13. Procédé de montage selon la revendication 12, dans lequel l'élément de cage (10) est fourni avec un élément de raccordement (50) ou :
l'installation (M6) de l'élément de raccordement (50) dans l'espace de réception (12, 12') à travers l'ouverture d'installation (14) sur le second côté frontal (18) ou à travers une ouverture (22) sur le premier côté frontal (16) avant que l'élément de cage (10) ait été collé sur la surface de composant ou l'installation (M6) d'un élément de raccordement (50) dans l'espace de réception (12, 12') à travers l'ouverture d'installation (14) sur le second côté frontal (18) après que l'élément de cage (10) a été collé sur la surface de composant.

14. Procédé de montage selon la revendication 12 ou 13, présentant l'autre étape durant le positionnement de l'élément de cage (10) avec la face de collage (16k) sur la surface de composant :
le déplacement (M3) de l'élément de paroi (30) d'une position saillante axialement sur la face de collage (16k) pour former une collerette déplaçable adjacente à la face de collage (16k) dans l'espace de réception (12, 12') de manière à empêcher l'entrée de colle (K) dans l'espace de réception (12, 12').

15. Procédé de montage selon l'une des revendications 12 à 14, dans lequel le durcissement s'effectue à l'aide de lumière et/ou de chaleur et/ou de l'écoulement d'un certain laps de temps.

16. Procédé de montage selon l'une des revendications 12 à 15, dans lequel l'élément de cage (10) se positionne avec la face de collage (16k) de façon adjacente à une ouverture de composant.

17. Procédé de montage selon l'une des revendications précédentes 12 à 16, sachant que l'élément de raccordement (50) est un écrou servant à établir un assemblage vissé et qui présente l'autre étape suivante :
le serrage d'une vis dans l'élément de raccordement (50) jusqu'à ce que l'élément de raccordement (50) repose sur la surface de composant.
